# EUROPEAN PATENT APPLICATION

(11) **EP 3 783 965 A1**
(43) Date of publication of application: **24.02.2021**
(21) Application number: 19826690.0
(22) Date of filing: 12.04.2019
(51) Int. Cl.: H04W 52/02

(54) **BASE STATION DEVICE ENERGY-SAVING METHOD AND DEVICE**

(30) Priority: 27.06.2018 CN 201810682368
(71) Applicant: HUAWEI TECHNOLOGIES CO., LTD., Shenzhen, Guangdong 518129 (CN)
(72) Inventor: GUAN, Xin, Shenzhen, Guangdong 518129 (CN); FANG, Liangren, Shenzhen, Guangdong 518129 (CN)
(74) Representative: Gill Jennings & Every LLP
(86) International application number: PCT/CN2019/082458
(87) International publication number: WO 2020/001129

(57) **Abstract**

Embodiments of the present invention disclose an energy-saving method and device for a base station device, used for determining an energy-saving level of the base station device. The method in an embodiment of the present invention includes: obtaining traffic load information of a base station and depth of discharge information of a power storage device; and determining an energy-saving level of the base station based on the traffic load information and the depth of discharge information, so that the base station works based on the energy-saving level. The traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

## Description

This application claims priority to Chinese Patent Application No. 201810682368.9, filed with the Chinese Patent Office on June 27, 2018 and entitled "ENERGY-SAVING METHOD AND DEVICE FOR BASE STATION DEVICE", which is incorporated herein by reference in its entirety.

### TECHNICAL FIELD

The present invention relates to the communications field, and in particular, to an energy-saving method and device for a base station device.

### BACKGROUND

In a scenario in which mains infrastructure is unavailable or mains is unstable, a hybrid power supply solution is usually used for base stations, including a grid hybrid solution (hybrid power supply of mains and a power storage device), a diesel hybrid solution (hybrid power supply of a diesel generator and a power storage device), and a solar hybrid solution (hybrid power supply of solar power and a power storage device).

Currently, in a hybrid power supply scenario, communications vendors adopt a solution in which power is supplied to base stations by alternately using a power generation system (mains, a diesel generator, or solar power) and a power storage device. The detailed solution is as follows.
1. Power supply by the power generation system: When the power generation system is running, it supplies power to the base station and charges the power storage device. When the power storage device is charged by a preset proportion of a full capacity, for example, 95%, charging of the power storage device is stopped. In a diesel hybrid scenario, in this case, the diesel generator stops supplying power and the power storage device begins to supply power, to reduce the operation of the diesel generator. In solar hybrid and grid hybrid scenarios, the power generation system continues to be used to supply power to the power storage device until the solar power or mains fails.
2. Discharge of the power storage device: When the power generation system stops working, for example, when the mains power is cut off, there is no sunlight, or the diesel generator stops running, the power storage device discharges power to the base station until the mains power, solar power, or diesel generator recovers or a depth of discharge (depth of discharge, DOD) of the power storage device reaches a specified threshold, for example, until a DOD of a lead-acid power storage device reaches 60% or a DOD of a lithium power storage device reaches 85%, and then the power storage device stops discharging.

According to the foregoing power supply solution, if there is a rainy season or consecutive rainy days in the solar hybrid scenario, or the mains power is cut off for a long time in the grid hybrid scenario, the power storage device discharges power to the base station. When a configuration of the power storage device is determined, a discharge time of the power storage device needs to be prolonged to ensure the reliability of services of the base station. However, in the diesel hybrid scenario, a discharge time of the power storage device directly affects the running time of the diesel generator. That is, the discharge time of the power storage device can be prolonged to reduce fuel fees.

### SUMMARY

Embodiments of the present invention provide an energy-saving method and device for a base station device, used for determining an energy-saving level of the base station device.

A first aspect of this application provides an energy-saving method for a base station device, including:
obtaining traffic load information of a base station and depth of discharge information of a power storage device; and then determining an energy-saving level of the base station based on the traffic load information and the depth of discharge information, so that the base station works based on the energy saving level. Because the traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

In some feasible embodiments, the traffic load information includes a traffic peak period and a traffic off-peak period. In this embodiment of this application, a preset value may be set. A period in which a traffic volume is greater than the preset value is referred to as a traffic peak period; or a period in which a traffic volume is less than the preset value is referred to as an off-peak period. In this embodiment of this application, the traffic load information may include the traffic peak period and the traffic off-peak period. When the power storage device is used to discharge power, the traffic volumes at different time points need to be considered. Specifically, if a traffic volume at a time point is higher, more power needs to be discharged; or if a traffic volume at a time point is lower, less power needs to be discharged. Because the traffic peak period and the traffic off-peak period are considered, energy may be saved for different traffic requirements.

In some feasible embodiments, the depth of discharge information includes that a depth of discharge of the power storage device is greater than or equal to a preset depth of discharge, or a depth of discharge of the power storage device is less than a preset depth of discharge. In some feasible embodiments, the preset depth of discharge is 40% or 60%. Because the depth of discharge of the power storage device is considered, energy may be saved for depths of discharge of different power storage devices.

In some feasible embodiments, the energy-saving level includes standard energy saving, general energy saving, and deep energy saving. In some feasible embodiments, energy is saved by 10% to 15% in the standard energy saving, energy is saved by 15% to 20% in the general energy saving, and energy is saved by more than 20% in the deep energy saving. In some feasible embodiments, the determining, by the energy-saving device, an energy-saving level of the base station based on the traffic load information and the depth of discharge information includes: when the traffic load information is the traffic peak period, and the depth of discharge information is that the depth of discharge of the power storage device is less than the preset depth of discharge, the energy-saving level is the standard energy-saving mode; or when the traffic load information is the traffic off-peak period, and the depth of discharge information is that the depth of discharge of the power storage device is less than the preset depth of discharge, the energy-saving level is the general energy-saving mode; or when the traffic load information is the traffic off-peak period, and the depth of discharge information is that the depth of discharge of the power storage device is greater than or equal to the preset depth of discharge, the energy-saving level is the deep energy-saving mode; or when the traffic load information is the traffic peak period, and the depth of discharge information is that the depth of discharge of the power storage device is greater than or equal to the preset depth of discharge, the energy-saving level is the general energy-saving mode. Different energy-saving levels are used in different cases, so that a best energy-saving effect can be achieved.

In some feasible embodiments, before the determining an energy-saving level of the base station based on the traffic load information and the depth of discharge information, the method further includes: obtaining discharge information of the energy storage device, where the discharge information is a discharge state or a non-discharge state; and if the discharge information is the non-discharge state, performing the step of determining an energy-saving level of the base station based on the traffic load information and the depth of discharge information. In some feasible embodiments, the power generation system includes a solar power generation system, a diesel generator power generation system, and a mains power supply system. Because the power storage device discharges power when the power generation system stops supplying power, the power generation system is fully utilized, and functions of the power storage device are fully performed, so that the power storage device can work for a longest time.

A second aspect of this application provides an energy-saving device, including:
an obtaining module, configured to obtain traffic load information of a base station and depth of discharge information of a power storage device; and a determining module, configured to determine an energy-saving level of the base station based on the traffic load information and the depth of discharge information, so that the base station works based on the energy-saving level.

The traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

In some feasible embodiments, the traffic load information includes a traffic peak period and a traffic off-peak period. Because the traffic peak period and the traffic off-peak period are considered, energy may be saved for different traffic requirements.

In some feasible embodiments, the depth of discharge information includes that a depth of discharge of the power storage device is greater than or equal to a preset depth of discharge, or a depth of discharge of the power storage device is less than a preset depth of discharge. In some feasible embodiments, the preset depth of discharge is 40% or 60%. Because the depth of discharge of the power storage device is considered, energy may be saved for depths of discharge of different power storage devices.

In some feasible embodiments, the energy-saving level includes standard energy saving, general energy saving, and deep energy saving.

In some feasible embodiments, the determining module is specifically configured to determine that:
when the traffic load information is the traffic peak period, and the depth of discharge information is that the depth of discharge of the power storage device is less than the preset depth of discharge, the energy-saving level is the standard energy-saving mode; or when the traffic load information is the traffic off-peak period, and the depth of discharge information is that the depth of discharge of the power storage device is less than the preset depth of discharge, the energy-saving level is the general energy-saving mode; or when the traffic load information is the traffic off-peak period, and the depth of discharge information is that the depth of discharge of the power storage device is greater than or equal to the preset depth of discharge, the energy-saving level is the deep energy-saving mode; or when the traffic load information is the traffic peak period, and the depth of discharge information is that the depth of discharge of the power storage device is greater than or equal to the preset depth of discharge, the energy-saving level is the general energy-saving mode. Different energy-saving levels are used for different situations, so that a best energy-saving effect is achieved.

In some feasible embodiments, the obtaining module is further configured to: obtain discharge information of the energy storage device, where the discharge information is a discharge state or a non-discharge state; and if the discharge information is the non-discharge state, perform the step of determining an energy-saving level of the base station based on the traffic load information and the depth of discharge information.

A third aspect of this application provides an energy-saving device, including:
a processor and a communications port.

The communications port is configured to obtain traffic load information of a base station and depth of discharge information of a power storage device.

The processor is configured to determine an energy-saving level of the base station based on the traffic load information and the depth of discharge information, so that the base station works based on the energy-saving level.

The traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

In some feasible embodiments, the traffic load information includes a traffic peak period and a traffic off-peak period. Because the traffic peak period and the traffic off-peak period are considered, energy may be saved for different traffic requirements.

In some feasible embodiments, the depth of discharge information includes that a depth of discharge of the power storage device is greater than or equal to a preset depth of discharge, or a depth of discharge of the power storage device is less than a preset depth of discharge. In some feasible embodiments, the preset depth of discharge is 40% or 60%. Because the depth of discharge of the power storage device is considered, energy may be saved for depths of discharge of different power storage devices.

In some feasible embodiments, the energy-saving level includes standard energy saving, general energy saving, and deep energy saving.

In some feasible embodiments, the processor is specifically configured to determine that:
when the traffic load information is the traffic peak period, and the depth of discharge information is that the depth of discharge of the power storage device is less than the preset depth of discharge, the energy-saving level is the standard energy-saving mode; or when the traffic load information is the traffic off-peak period, and the depth of discharge information is that the depth of discharge of the power storage device is less than the preset depth of discharge, the energy-saving level is the general energy-saving mode; or when the traffic load information is the traffic off-peak period, and the depth of discharge information is that the depth of discharge of the power storage device is greater than or equal to the preset depth of discharge, the energy-saving level is the deep energy-saving mode; or when the traffic load information is the traffic peak period, and the depth of discharge information is that the depth of discharge of the power storage device is greater than or equal to the preset depth of discharge, the energy-saving level is the general energy-saving mode. Different energy-saving levels are used for different situations, so that a best energy-saving effect is achieved.

In some feasible embodiments, before determining the energy-saving level of the base station based on the traffic load information and the depth of discharge information, the communications port is further configured to obtain discharge information of the energy storage device, where the discharge information is a discharge state or a non-discharge state. The processor is further configured to: if the discharge information is the discharge state, perform the step of determining an energy-saving level of the base station based on the traffic load information and the depth of discharge information. Because the power storage device discharges power when the power generation system stops supplying power, the power generation system is fully utilized, and functions of the power storage device are fully performed, so that the power storage device can work for a longest time.

According to still another aspect of this application, a computer-readable storage medium is provided. The computer-readable storage medium stores an instruction, and when the instruction is run on a computer, the computer is enabled to perform the method according to the foregoing aspects.

According to the foregoing technical solutions, it can be learned that the embodiments of the present invention have the following advantages:

The traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

### BRIEF DESCRIPTION OF DRAWINGS

FIG. 1 is a schematic diagram of an embodiment of an energy-saving method;
FIG. 2-1 is a schematic diagram of an embodiment of an energy-saving system architecture according to this application;
FIG. 2-2 is a schematic diagram of another embodiment of an energy-saving system architecture according to this application;
FIG. 3 is a schematic diagram of another embodiment of an energy-saving method;
FIG. 4 is a schematic diagram of an embodiment of an energy-saving device; and
FIG. 5 is a schematic diagram of another embodiment of an energy-saving device.

### DESCRIPTION OF EMBODIMENTS

Embodiments of the present invention provide an energy-saving method and device for a base station device, used for determining an energy-saving level of the base station device.

To make a person skilled in the art understand the technical solutions in this application better, the following clearly and completely describes the technical solutions in the embodiments of this application with reference to the accompanying drawings in the embodiments of this application. Apparently, the described embodiments are merely some but not all of the embodiments of this application.

In the specification, claims, and accompanying drawings of this application, the terms "first", "second", "third", "fourth", and so on (if any) are intended to distinguish between similar objects but do not necessarily indicate a specific order or sequence. It should be understood that the data used in such a way are interchangeable in proper circumstances so that the embodiments described herein can be implemented in other orders than the order illustrated or described herein. In addition, the terms "include", "contain" and any other variants mean to cover non-exclusive inclusion, for example, a process, method, system, product, or device that includes a list of steps or units is not necessarily limited to those steps or units that are expressly listed, instead, other steps or units that are not expressly listed or inherent to such processes, methods, products, or devices may be included.

In a scenario in which mains infrastructure is unavailable or mains is unstable, a hybrid power supply solution is usually used for communications base stations, including a grid hybrid solution (hybrid power supply of mains and a power storage device), a diesel hybrid solution (hybrid power supply of a diesel generator and a power storage device), and a solar hybrid solution (hybrid power supply of solar power and a power storage device).

Currently, in a hybrid power supply scenario, communications vendors adopt a solution in which power is supplied to base stations by alternately using a power generation system (mains power, diesel power, or solar power) and a power storage device. Power supply by the power generation system: When the power generation system is running, it supplies power to the base station and charges the power storage device. When the power storage device is charged by a preset proportion of a full capacity, for example, 95%, charging of the power storage device is stopped. In a diesel hybrid scenario, in this case, the diesel generator stops supplying power and the power storage device begins to discharge power, to reduce the operation of the diesel generator. In solar hybrid and grid hybrid scenarios, the power generation system continues to be used to charge the power storage device until the solar power or mains fails. Discharge of the power storage device: When the power generation system stops working, for example, when the mains power is cut off, there is no sunlight, or the diesel generator stops running, the power storage device discharges power to the base station until the mains power, solar power, or diesel power recovers or a depth of discharge (depth of discharge, DOD) of the power storage device reaches a specified threshold, for example, until a DOD of a lead-acid power storage device reaches 60% or a DOD of a lithium power storage device reaches 85%, and then the power storage device stops discharging.

However, if there are consecutive rainy days in the solar hybrid scenario, or the mains power is cut off for a long time in the grid hybrid scenario, the power storage device discharges power to the base station. When a configuration of the power storage device is determined, a discharge time of the power storage device needs to be prolonged to ensure the reliability of services of the base station. However, in the diesel hybrid scenario, a discharge time of the power storage device directly affects the running time of the diesel generator. That is, the discharge time of the power storage device can be prolonged to reduce fuel fees.

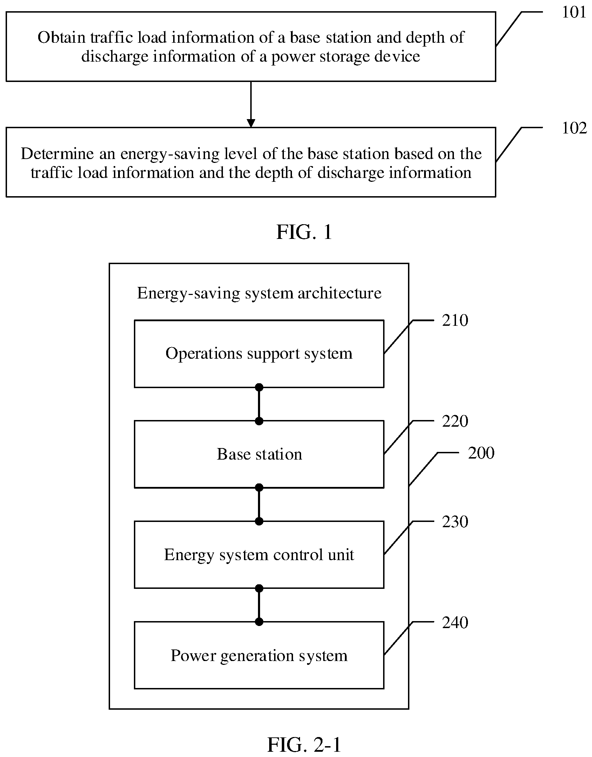

Therefore, referring to FIG. 1, FIG. 1 is a schematic diagram of an embodiment of an energy-saving method, including the following steps.
101. Obtain traffic load information of a base station and depth of discharge information of a power storage device.
102. Determine an energy-saving level of the base station based on the traffic load information and the depth of discharge information, so that the base station works based on the energy-saving level.

In this application, the traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

FIG. 2-1 shows an energy-saving system architecture 200 of this application, including an operations support system 210 (The Office of Strategic Services, OSS), a base station 220, an energy system control unit 230, and a power generation system 240.

In this embodiment of this application, the base station 220, that is, a public mobile communications base station, is a form of a radio station, and is a radio transceiver station that transmits information to a mobile phone terminal through a mobile communications switching center in specific radio coverage. In some feasible embodiments, the base station 220 includes a base station controller (Base Station Controller, BSC), a baseband unit (Building Base band Unit, BBU), and a remote radio unit (Radio Remote Unit, RRU). The BSC is configured to perform radio channel management, implement a call, establish or remove a communications link, and control a cross-zone handover of a mobile station in a control zone; the BBU is configured to transmit a baseband signal; and the RRU is configured to convert a baseband optical signal into a radio frequency signal at a remote end and amplify the radio frequency signal for transmission.

In this embodiment of this application, the operations support system 210 is a comprehensive service operation and management platform, and also is a comprehensive management platform integrating a conventional IP data service and a mobile value-added service. The operations support system 210 mainly includes parts such as network management, system management, charging, operation, accounting, and customer service, and the parts in the system are organically integrated through a unified information bus. The operations support system may not only help an operator develop an operations support system that matches a characteristic of the operator, but also help determine a development direction of the system. In addition, the operations support system can help a user formulate an integration standard of the system, to improve a service level for the user.

In this embodiment of this application, the energy system control unit 230 is connected to the power generation system 240, and is configured to: obtain depth of discharge information of a power storage device in the power generation system 240, and transmit the depth of discharge information to the base station 220 or the operations support system 210. In some feasible embodiments, the energy system control unit 230 may be a server. The server may vary greatly due to different configurations or performance, and may include one or more central processing units (central processing units, CPU) (for example, one or more processors), a memory, one or more storage media (for example, one or more mass storage devices) that store application programs or data. The memory and the storage media may perform temporary storage or permanent storage. The program stored in the storage media may include one or more modules (not shown in the figure), and each module may include a series of instruction operations for the server. Further, the central processing unit may be configured to communicate with the storage medium, and perform, on the server, the series of instruction operations in the storage medium.

In this embodiment of this application, the power generation system 240 may include a power generation system and a power storage device. In the embodiments of this application, the power storage device is a cup, a groove, another container or a composite container that contains an electrolyte solution and a metal electrode to generate an electric current and that is an apparatus that can convert chemical energy into electric energy. Main performance parameters of the power storage device include an electromotive force, a capacity, a specific energy and a resistance. The power storage device is used as an energy source, so that a stable voltage and a stable current can be obtained. The power storage device can stably discharge power for a long time, and has a current that is slightly affected by an external environment. In addition, the power storage device has a simple structure of a battery, is easy to carry, is easy to perform a charge and discharge operation, is not affected by an external climate and temperature, and has stable and reliable performance. The power storage device plays an important role in all aspects of modern social life.

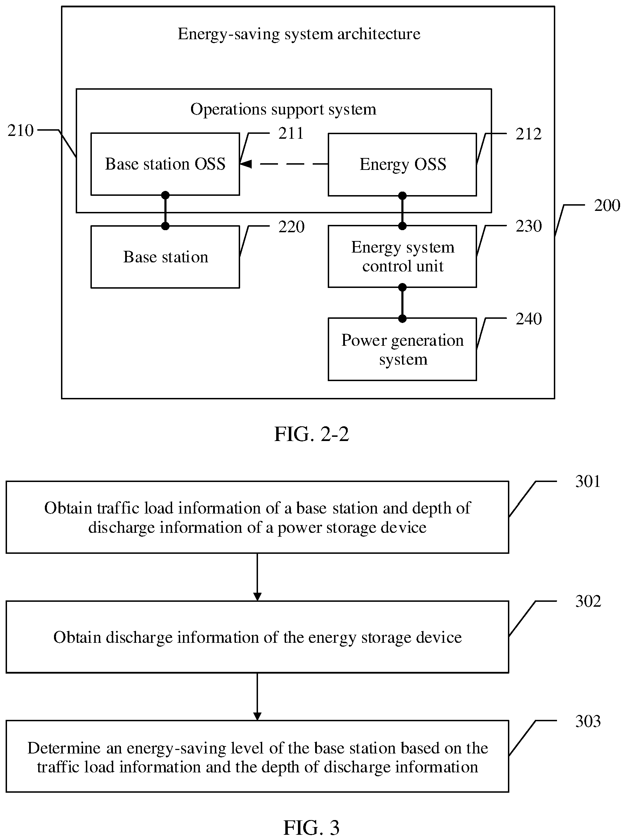

FIG. 3 is a schematic diagram of another embodiment of an energy-saving method, including the following steps.

301. Obtain traffic load information of a base station and depth of discharge information of a power storage device.

In some feasible embodiments, a depth of discharge of an energy storage device may be obtained by connection to an energy system control unit of a power generation system, and the traffic load information may be obtained through the base station.

In this embodiment of this application, the traffic load information includes traffic volumes of the base station at different time points in one period. Generally, one period may be one day. In some feasible embodiments, traffic volumes in a day are variable, and different traffic volumes cause different power that needs to be consumed. Generally, a higher traffic volume requires more power that needs to be consumed.

In some feasible embodiments, the traffic volume in a period may be of different orders of magnitude, for example, the traffic volume gradually increases in ascending order of orders of magnitude. In some feasible embodiments, the traffic volume may also be simply divided into two levels, namely, a traffic peak period and a non-peak period.

In this embodiment of this application, a preset value may be set. A period in which a traffic volume is greater than the preset value is referred to as a traffic peak period; or a period in which a traffic volume is less than the preset value is referred to as an off-peak period. In this embodiment of this application, the traffic load information may include the traffic peak period and the traffic off-peak period. When the power storage device is used to discharge power, the traffic volumes at different time points need to be considered. Specifically, if a traffic volume at a time point is higher, more power needs to be discharged; or if a traffic volume at a time point is lower, less power needs to be discharged.

In this embodiment of this application, when the power storage device is being used or has been used, the depth of discharge of the power storage device may be detected. It should be noted that the depth of discharge indicates a quantity of power that has been used by the power storage device. For example, 20% indicates 20% of the power of the power storage device has been used, and 80% of the power remains. In some feasible embodiments, when the depth of discharge reaches a preset depth of discharge, the base station may enter an energy-saving state to prolong a discharge time of the power storage device. In some feasible embodiments, the preset depth of discharge may be 40% or 60%. In other words, corresponding remaining power is 60% and 40%. In some feasible embodiments, the depth of discharge information includes that a depth of discharge of the power storage device is greater than or equal to a preset depth of discharge, or a depth of discharge of the power storage device is less than a preset depth of discharge.

302. Obtain discharge information of the energy storage device, where the discharge information is a discharge state or a non-discharge state.

The power generation system includes a solar power generation system, a diesel generator power generation system, and a mains power supply system. In some feasible embodiments, hybrid power supply is mainly implemented by using a hybrid power generation system. The hybrid power generation system includes a power generation system and an energy storage device. The mains power, the diesel power, and the solar power are referred to as the power generation system. The energy storage device includes but is not limited to a lead-acid battery, a lithium battery, and a temperature cycle battery that are currently used for communications energy. In a diesel hybrid scenario, fuel fees are high. Generally, fuel fees per unit of energy consumption are nearly six times that of electricity fees. In a solar hybrid scenario, if a solar power yield is small in consecutive overcast and rainy days, a battery backup time requires to be long. Therefore, how to prolong the power backup time of the battery and ensure reliability of uninterrupted base station services is critical in a power supply process of the hybrid power system.

It should be noted that, in this embodiment of this application, if the power generation system supplies power, the power storage device may not be used for discharging; and if the power generation system no longer generates power, the power storage device may be used for discharging. For example, in a case of drought, the mains power from a hydroelectric power station may be cut off for a long time. For example, at night or at dusk, the solar power may not be continuously supplied; or when use of gasoline is minimized because costs of gasoline are too high, the power storage device needs to be used for discharging. When the discharge information is a discharge state, step 303 is performed.

303. Determine an energy-saving level of the base station based on the traffic load information and the depth of discharge information, so that the base station works based on the energy-saving level.

In this embodiment of this application, when the power storage device needs to be used for discharging, it may be determined, based on the traffic load information and the depth of discharge information, whether energy needs to be saved and which energy-saving level is needed. In some feasible embodiments, the energy-saving level may include a plurality of energy-saving levels, or may include three energy-saving levels: standard energy saving, general energy saving, and deep energy saving. It should be noted that energy is saved by 10% to 15% in the standard energy saving, and in this case, a key performance indicator (Key Performance Indicator, KPI) of a service of the base station is not affected. Energy is saved by 15% to 20% in the general energy saving, and this affects some KPIs (less than 10%) of the service. For example, if the base station disables some carriers and reduces power consumption, and a network speed may be slowed down. However, compared with the standard energy saving, energy-saving benefits are further increased and battery life is prolonged in the general energy saving. Energy is saved by more than 20% in the deep energy saving. In this case, impact on KPIs of the service is greater than 10%. However, compared with the general energy saving, energy-saving benefits are further increased and battery life is prolonged in the deep energy saving.

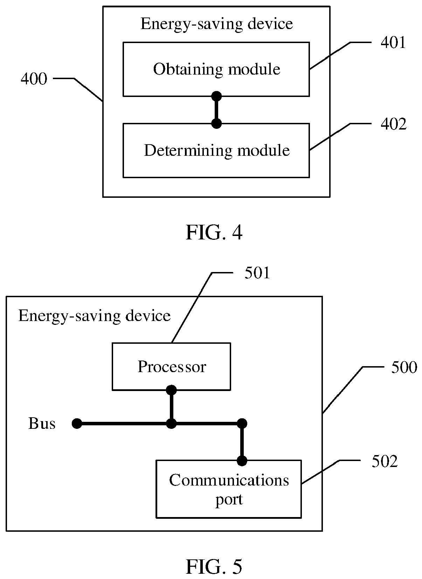

An example in which the traffic load information is a traffic peak period or an off-peak period, and the depth of discharge is greater than or equal to the preset depth of discharge, or less than the preset depth of discharge is used for description. FIG. 4 is a schematic diagram of an embodiment of an energy-saving device.

It can be learned that, in a traffic peak period (for example, at a T1 moment), the power generation system runs, and the power storage device is in a charging state. Because the power supply system has an abundant supply of electric energy, the base station does not enter the energy-saving mode. When the traffic load information is a traffic peak, at a T2 moment in FIG. 4, the battery is fully charged. If the power generation system stops supplying power at this time, the power storage device enters a discharge state, and the base station enters a standard energy-saving mode. In this case, the energy is saved by 10% to 15%, and KPIs of the service are not affected. At a T3 moment, the traffic load period changes from a peak period to an off-peak period. In this case, the base station enables a general energy-saving mode to further save energy when some KPIs (less than 10%) of the service are affected, and the energy is saved by 15% to 20% to prolong a discharge time of the power storage device.

At a T4 moment during the discharge period of the power storage device, the traffic is still in the off-peak period, but the depth of discharge of the power storage device has reached a conventional default value 60%. If a preset depth of discharge (which can be set to 80%) of the power storage device has been set for further discharging, the base station needs to enter the deep energy-saving mode. In this case, impact on KPIs of the service is greater than 10%, but the energy is saved by more than 20% to prolong the discharge time of the power storage device. If the power supply is not restored at a traffic peak moment, and the depth of discharge information is that the depth of discharge of the power storage device is greater than or equal to the preset depth of discharge, the energy-saving level is the general energy-saving mode. At a T5 moment, that is, a traffic peak moment, if the power generation system resumes to supply power, the power storage device enters the charging state, and the base station disables the energy-saving mode.

In general, when the traffic load information is the traffic peak period, and the depth of discharge information is that the depth of discharge of the power storage device is less than the preset depth of discharge, the energy-saving level is the standard energy-saving mode; or when the traffic load information is the traffic off-peak period, and the depth of discharge information is that the depth of discharge of the power storage device is less than the preset depth of discharge, the energy-saving level is the general energy-saving mode; or when the traffic load information is the traffic off-peak period, and the depth of discharge information is that the depth of discharge of the power storage device is greater than or equal to the preset depth of discharge, the energy-saving level is the deep energy-saving mode; or when the traffic load information is the traffic peak period, and the depth of discharge information is that the depth of discharge of the power storage device is greater than or equal to the preset depth of discharge, the energy-saving level is the general energy-saving mode.

It should be noted that in this embodiment of this application, the step of "determining an energy-saving level of the base station based on the traffic load information and the depth of discharge information" may be performed by the base station, or may be performed by an operation support system. This is not limited herein. According to different execution bodies, the following four cases may be discussed separately.

### 1. A BBU performs the operation.

In some feasible embodiments, the base station and the energy system control unit may be managed by a same operations support system. Specifically, the base station may include an RRU, a BBU, and a BSC. The BBU is responsible for collecting traffic load information of the base station, and the energy system control unit is responsible for collecting information about whether a power generation system supplies power and depth of discharge information of a power storage device. In this embodiment of this application, the BBU performs interactive communication with the energy system control unit, the energy system control unit sends a running status of the power generation system and the depth of discharge information of the power storage device to the BBU, and the BBU determines an energy-saving level of the base station based on the current traffic load information and the depth of discharge information, to perform adaptive adjustment, for example, start a level-based energy-saving mode. Finally, the BBU reports the traffic load information and the depth of discharge information to the operations support system, and the operations support system is responsible for collecting statistics on the traffic load information, the depth of discharge information, and a corresponding energy-saving level.

### 2. An operations support system performs the operation.

In some feasible embodiments, the base station and the energy system control unit may be managed by a same operations support system. Specifically, the base station may include an RRU, a BBU, and a BSC. The BBU is responsible for collecting traffic load information of the base station, and the energy system control unit is responsible for collecting information about whether a power generation system supplies power and depth of discharge information of a power storage device. The BBU reports the collected traffic load information to the operations support system. The energy system control unit reports a running status (such as power supply and power failure) of the power generation system and the depth of discharge of the power storage device to the operations support system, the operations support system determines an energy-saving level of the base station based on the current traffic load information, the power generation system, and the depth of discharge information, to perform adaptive adjustment, for example, start a level-based energy-saving mode. In addition, the operations support system is responsible for collecting statistics on the traffic load information, the depth of discharge information, and a corresponding energy-saving level.

3. Two operations support systems separately performs the operation. FIG. 2-2 is a schematic diagram of another embodiment of an energy-saving system architecture according to this application.

In some feasible embodiments, an operations support system of the base station and an operations support system of the energy system control unit may be separated, that is, two different operations support systems are separately used. Specifically, the base station may include an RRU, a BBU, and a BSC. The BBU is responsible for collecting traffic load information of the base station, and the energy system control unit is responsible for collecting information about whether a power generation system supplies power and depth of discharge information of a power storage device. The BBU and the energy system control unit report the collected data to corresponding operations support systems, which are referred to as a base station OSS and an energy OSS, respectively.

The energy system control unit reports a running status of the power generation system and the depth of discharge information of the power storage device to the corresponding energy OSS. Then, the energy OSS transmits the data to the base station OSS through a corresponding interface channel, and the base station OSS determines, based on the current traffic load information, the power generation system, and the depth of discharge information, an energy-saving level of the base station, to perform adaptive adjustment. Then an instruction of a corresponding level-based energy-saving mode is delivered to the base station. In addition, the operations support system is responsible for collecting statistics on the traffic load information, the depth of discharge information, and a corresponding energy-saving level.

4. Two operations support systems are separated, and the BBU performs the operation, as shown in FIG. 2-2.

In some feasible embodiments, an operations support system of the base station and an operations support system of the energy system control unit may be separated, that is, two different operations support systems are separately used. Specifically, the base station may include an RRU, a BBU, and a BSC. The BBU is responsible for collecting traffic load information of the base station, and the energy system control unit is responsible for collecting information about whether a power generation system supplies power and depth of discharge information of a power storage device. The energy system control unit is responsible for collecting information about whether a power generation system supplies power and depth of discharge information of a power storage device. The BBU and the energy system control unit report the collected data to corresponding operations support systems.

The energy system control unit reports a running status of the power generation system and the depth of discharge information of the power storage device to the corresponding energy OSS. Then, the energy OSS transmits the data to the base station OSS through a corresponding interface channel, the base station OSS sends energy data to the BBU, and the BBU determines, based on the current traffic load information, the power generation system, and the depth of discharge information, an energy-saving level of the base station, to perform adaptive adjustment. In addition, the operations support system is responsible for collecting statistics on the traffic load information, the depth of discharge information, and a corresponding energy-saving level.

The foregoing describes the method, and the following describes details from a perspective of a functional module. FIG. 4 shows an energy-saving device 400, including:
an obtaining module 401, configured to obtain traffic load information of a base station and depth of discharge information of a power storage device; and
a determining module 402, configured to determine an energy-saving level of the base station based on the traffic load information and the depth of discharge information, so that the base station works based on the energy-saving level.

The traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

In some feasible embodiments, the traffic load information includes a traffic peak period and a traffic off-peak period. Because the traffic peak period and the traffic off-peak period are considered, energy may be saved for different traffic requirements.

In some feasible embodiments, the depth of discharge information includes that a depth of discharge of the power storage device is greater than or equal to a preset depth of discharge, or a depth of discharge of the power storage device is less than a preset depth of discharge. In some feasible embodiments, the preset depth of discharge is 40% or 60%. Because the depth of discharge of the power storage device is considered, energy may be saved for depths of discharge of different power storage devices.

In some feasible embodiments, the energy-saving level includes standard energy saving, general energy saving, and deep energy saving.

In some feasible embodiments, the determining module is specifically configured to determine that:
when the traffic load information is the traffic peak period, and the depth of discharge information is that the depth of discharge of the power storage device is less than the preset depth of discharge, the energy-saving level is the standard energy-saving mode; or when the traffic load information is the traffic off-peak period, and the depth of discharge information is that the depth of discharge of the power storage device is less than the preset depth of discharge, the energy-saving level is the general energy-saving mode; or when the traffic load information is the traffic off-peak period, and the depth of discharge information is that the depth of discharge of the power storage device is greater than or equal to the preset depth of discharge, the energy-saving level is the deep energy-saving mode; or when the traffic load information is the traffic peak period, and the depth of discharge information is that the depth of discharge of the power storage device is greater than or equal to the preset depth of discharge, the energy-saving level is the general energy-saving mode. Different energy-saving levels are used for different situations, so that a best energy-saving effect is achieved.

In some feasible embodiments, the obtaining module is further configured to: obtain discharge information of the energy storage device, where the discharge information is a discharge state or a non-discharge state; and if the discharge information is the non-discharge state, perform the step of determining an energy-saving level of the base station based on the traffic load information and the depth of discharge information. Because the power storage device discharges power when a power generation system stops supplying power, the power generation system is fully utilized, and functions of the power storage device are fully performed, so that the power storage device can work for a longest time.

FIG. 5 shows an energy-saving device 500, including:
a processor 501 and a communications port 502.

The communications port 502 is configured to obtain traffic load information of a base station and depth of discharge information of a power storage device.

The processor 501 is configured to determine an energy-saving level of the base station based on the traffic load information and the depth of discharge information, so that the base station works based on the energy-saving level.

The traffic load information of the base station and the depth of discharge information of the power storage device are obtained, and then the energy-saving level of the base station is determined based on the traffic load information and the depth of discharge information, so that the base station works based on the energy-saving level, and a discharge duration of the power storage device can be prolonged to a maximum extent while ensuring service operation.

In some feasible embodiments, the traffic load information includes a traffic peak period and a traffic off-peak period. Because the traffic peak period and the traffic off-peak period are considered, energy may be saved for different traffic requirements.

In some feasible embodiments, the depth of discharge information includes that a depth of discharge of the power storage device is greater than or equal to a preset depth of discharge, or a depth of discharge of the power storage device is less than a preset depth of discharge. In some feasible embodiments, the preset depth of discharge is 40% or 60%. Because the depth of discharge of the power storage device is considered, energy may be saved for depths of discharge of different power storage devices.

In some feasible embodiments, the energy-saving level includes standard energy saving, general energy saving, and deep energy saving.

In some feasible embodiments, the processor is specifically configured to determine that:
when the traffic load information is the traffic peak period, and the depth of discharge information is that the depth of discharge of the power storage device is less than the preset depth of discharge, the energy-saving level is the standard energy-saving mode; or when the traffic load information is the traffic off-peak period, and the depth of discharge information is that the depth of discharge of the power storage device is less than the preset depth of discharge, the energy-saving level is the general energy-saving mode; or when the traffic load information is the traffic off-peak period, and the depth of discharge information is that the depth of discharge of the power storage device is greater than or equal to the preset depth of discharge, the energy-saving level is the deep energy-saving mode; or when the traffic load information is the traffic peak period, and the depth of discharge information is that the depth of discharge of the power storage device is greater than or equal to the preset depth of discharge, the energy-saving level is the general energy-saving mode. Different energy-saving levels are used for different situations, so that a best energy-saving effect is achieved.

In some feasible embodiments, before determining the energy-saving level of the base station based on the traffic load information and the depth of discharge information, the communications port 502 is further configured to obtain discharge information of the energy storage device, where the discharge information is a discharge state or a non-discharge state. The processor 501 is further configured to: if the discharge information is the discharge state, perform the step of determining an energy-saving level of the base station based on the traffic load information and the depth of discharge information.

All or some of the foregoing embodiments may be implemented through software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It may be clearly understood by a person skilled in the art that for convenient and brief description, for a detailed working process of the described system, apparatus, and unit, refer to a corresponding process in the foregoing method embodiments. Details are described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An energy-saving method for a base station device, comprising:
obtaining traffic load information of a base station and depth of discharge information of a power storage device; and
determining an energy-saving level of the base station based on the traffic load information and the depth of discharge information, so that the base station works based on the energy-saving level.

2. The method according to claim 1, wherein the traffic load information comprises a traffic peak period and a traffic off-peak period.

3. The method according to claim 1 or 2, wherein the depth of discharge information comprises that a depth of discharge of the power storage device is greater than or equal to a preset depth of discharge, or a depth of discharge of the power storage device is less than a preset depth of discharge.

4. The method according to claim 3, wherein the preset depth of discharge is 40% or 60%.

5. The method according to claim 3 or 4, wherein the energy-saving level comprises standard energy saving, general energy saving, and deep energy saving.

6. The method according to claim 5, wherein energy is saved by 10% to 15% in the standard energy saving, energy is saved by 15% to 20% in the general energy saving, and energy is saved by more than 20% in the deep energy saving.

7. The method according to claim 5 or 6, wherein the determining, by the energy-saving device, an energy-saving level of the base station based on the traffic load information and the depth of discharge information comprises:
when the traffic load information is the traffic peak period, and the depth of discharge information is that the depth of discharge of the power storage device is less than the preset depth of discharge, the energy-saving level is the standard energy-saving mode; or
when the traffic load information is the traffic off-peak period, and the depth of discharge information is that the depth of discharge of the power storage device is less than the preset depth of discharge, the energy-saving level is the general energy-saving mode; or
when the traffic load information is the traffic off-peak period, and the depth of discharge information is that the depth of discharge of the power storage device is greater than or equal to the preset depth of discharge, the energy-saving level is the deep energy-saving mode; or
when the traffic load information is the traffic peak period, and the depth of discharge information is that the depth of discharge of the power storage device is greater than or equal to the preset depth of discharge, the energy-saving level is the general energy-saving mode.

8. The method according to any one of claims 1 to 7, wherein before the determining an energy-saving level of the base station based on the traffic load information and the depth of discharge information, the method further comprises:
obtaining discharge information of the energy storage device, wherein the discharge information is a discharge state or a non-discharge state; and
if the discharge information is the non-discharge state, performing the step of determining an energy-saving level of the base station based on the traffic load information and the depth of discharge information.

9. The method according to claim 8, wherein the power generation system comprises a solar power generation system, a diesel generator power generation system, and a mains power supply system.

10. An energy-saving device, comprising:
an obtaining module, configured to obtain traffic load information of a base station and depth of discharge information of a power storage device; and
a determining module, configured to determine an energy-saving level of the base station based on the traffic load information and the depth of discharge information, so that the base station works based on the energy-saving level.

11. The energy-saving device according to claim 10, wherein the traffic load information comprises a traffic peak period and a traffic off-peak period.

12. The energy-saving device according to claim 10 or 11, wherein the depth of discharge information comprises that a depth of discharge of the power storage device is greater than or equal to a preset depth of discharge, or a depth of discharge of the power storage device is less than a preset depth of discharge.

13. The energy-saving device according to claim 12, wherein the energy-saving level comprises standard energy saving, general energy saving, and deep energy saving.

14. The energy-saving device according to claim 13, wherein the determining module is specifically configured to determine that:
when the traffic load information is the traffic peak period, and the depth of discharge information is that the depth of discharge of the power storage device is less than the preset depth of discharge, the energy-saving level is the standard energy-saving mode; or
when the traffic load information is the traffic off-peak period, and the depth of discharge information is that the depth of discharge of the power storage device is less than the preset depth of discharge, the energy-saving level is the general energy-saving mode; or
when the traffic load information is the traffic off-peak period, and the depth of discharge information is that the depth of discharge of the power storage device is greater than or equal to the preset depth of discharge, the energy-saving level is the deep energy-saving mode; or
when the traffic load information is the traffic peak period, and the depth of discharge information is that the depth of discharge of the power storage device is greater than or equal to the preset depth of discharge, the energy-saving level is the general energy-saving mode.

15. The energy-saving device according to any one of claims 10 to 14, wherein
the obtaining module is further configured to: obtain discharge information of the energy storage device, wherein the discharge information is a discharge state or a non-discharge state; and if the discharge information is the non-discharge state, perform the step of determining an energy-saving level of the base station based on the traffic load information and the depth of discharge information.

16. An energy-saving device, comprising:
a processor and a memory, wherein
the memory is configured to store a program; and the processor invokes the program stored in the memory, to perform the following steps:
obtaining traffic load information of a base station and depth of discharge information of a power storage device; and
determining an energy-saving level of the base station based on the traffic load information and the depth of discharge information, so that the base station works based on the energy-saving level.

17. The device according to claim 16, wherein the traffic load information comprises a traffic peak period and a traffic off-peak period.

18. The device according to claim 17, wherein the depth of discharge information comprises that a depth of discharge of the power storage device is greater than or equal to a preset depth of discharge, or a depth of discharge of the power storage device is less than a preset depth of discharge.

19. The device according to claim 18, wherein the energy-saving level comprises standard energy saving, general energy saving, and deep energy saving.

20. The device according to claim 19, wherein the determining, by the energy-saving device, an energy-saving level of the base station based on the traffic load information and the depth of discharge information comprises:
when the traffic load information is the traffic peak period, and the depth of discharge information is that the depth of discharge of the power storage device is less than the preset depth of discharge, the energy-saving level is the standard energy-saving mode; or
when the traffic load information is the traffic off-peak period, and the depth of discharge information is that the depth of discharge of the power storage device is less than the preset depth of discharge, the energy-saving level is the general energy-saving mode; or
when the traffic load information is the traffic off-peak period, and the depth of discharge information is that the depth of discharge of the power storage device is greater than or equal to the preset depth of discharge, the energy-saving level is the deep energy-saving mode; or
when the traffic load information is the traffic peak period, and the depth of discharge information is that the depth of discharge of the power storage device is greater than or equal to the preset depth of discharge, the energy-saving level is the general energy-saving mode.

21. The device according to any one of claims 16 to 20, wherein before the determining an energy-saving level of the base station based on the traffic load information and the depth of discharge information, the method further comprises:
obtaining discharge information of the energy storage device, wherein the discharge information is a discharge state or a non-discharge state; and
if the discharge information is the discharge state, performing the step of determining an energy-saving level of the base station based on the traffic load information and the depth of discharge information.

22. A computer-readable storage medium, comprising an instruction, wherein when the instruction is run on a computer, the computer is enabled to perform the method according to any one of claims 1 to 9.
